**Europäisches Patentamt**

**European Patent Office**

**Office européen des brevets**

(19)

(11) Publication number: **0 087 235**

**A1**

# EUROPEAN PATENT APPLICATION

(12)

(21) Application number: **83300588.7**

(22) Date of filing: **04.02.83**

(51) Int. Cl.³: **G 01 N 21/89**
**G 02 B 27/17, G 02 F 1/33**

(30) Priority: **10.02.82 JP 18849/82**

(43) Date of publication of application:
**31.08.83 Bulletin 83/35**

(84) Designated Contracting States:
**BE DE FR GB NL**

(71) Applicant: **KONISHIROKU PHOTO INDUSTRY CO. LTD.**
**No. 26-2, Nishishinjuku 1-chome Shinjuku-ku**
**Tokyo 160(JP)**

(72) Inventor: **Maeda, Motoharu**
**Konishiroku Apart 136 No. 6-5-2, Tamadaira**
**Hino-Shi Tokyo(JP)**

(72) Inventor: **Oishi, Atsushi**
**Konishiroku Ohwada Ryo No. 2-5-19, Ohwada-Cho**
**Hachioji-Shi Tokyo(JP)**

(74) Representative: **Wood, Anthony Charles et al,**
**c/o MICHAEL BURNSIDE & PARTNERS 2 Serjeants' Inn**
**Fleet Street**
**London EC4Y 1HL(GB)**

(54) **Surface fault detector.**

(57) A surface fault detector of the flying spot type wherein an acousto-optical deflector (10) is disposed in the light path between a light source (1) and a rotatable polygonal mirror (2) to change the angle of incidence of the light beam upon the rotatable polygonal mirror (2) in a sense tending to render more regular the pitch of successive scans of the flying spot over a surface (4) under inspection. The acousto-optical deflector has a piezoelectric element, and an acousto-optical medium attached to the piezoelectric element.

F I G. 4 (a)

EP 0 087 235 A1

# SURFACE FAULT DETECTOR

The present invention relates to a surface fault detector and more especially to a surface fault detector using a flying spot method to detect any defect on transparent films, glass photographic plates and plastic material.

Surface fault detectors of flying spot type are used to inspect the surface and back of an object such as films and glass dry plates for any defects and variation in the thickness of coating applied over the surface of the object.

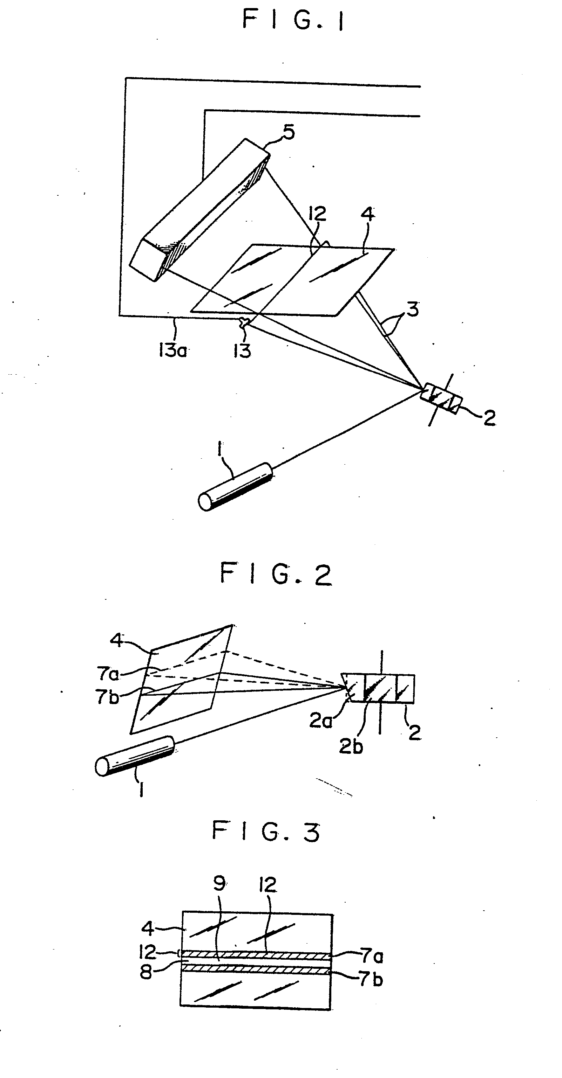

In conventional surface fault detector of flying spot type as shown in Fig. 1, a light beam from a light source L which generates a laser beam is reflected by a rotatable polygon mirror 2. A reflected scanning light beam 3 is radiated onto the surface of an object 4 to be inspected such as glass photographic plate. A light that has passed through the object 4 is received by a light receiving element 5. When there is a defect on the surface of the object 4, the light receiving element 5 generates a signal indicating abnormality which is sent to the signal processing circuit to decide whether the surface is good or bad. On the other hand a light detector 13 such as photodiode array is located where the scanning light beam not radiated against the object passes. The output signal from the light detector 13 is used as a synchronizing signal 13a and is sent to the signal processing circuit where it is used to process the fault information such as the position of the fault.

If in this case there is a variation in the angle of the reflection surfaces 2a, 2b, ... of the rotatable polygon mirror 2 with respect to the rotating axis or a wobble in the rotating axis (these variations are referred to as the mirror face angle variation), as shown in Fig. 2, the scanning light beam position 7a, 7b, ... on the object 4 will vary, creating the regions 8 where the light beam does not scan, as shown in Fig. 3. So if there are defects 9 in such regions 8, they cannot be detected.

To avoid this it is a usual practice to use the rotatable polygon mirror which has little mirror face angle variation or to use a large light spot to expand the width of scanned lines so as to detect the defect 9. However, fabricating the rotatable polygon mirror with little mirror face angle variation is expensive and it is very difficult to manufacture a rotating mirror having high accuracy.  Enlargement of light spot will deteriorate the detection capability.  These are the major drawbacks of the conventional surface fault detector.

The object of this invention is to provide the surface fault detector having high accuracy which is improved on the above-mentioned drawbacks.

The feature of the flying spot type surface defect detector of this invention consisting of a light source, a rotatable polygon mirror and a light receiving element is to incorporate with a correction means such as an acousto-optic deflector, located on the light path between the light source and the rotatable polygon mirror, which makes it possible to change the incident angle of the light beam incident on the rotatable polygon mirror.

These and other objects and features of this invention will become apparent from the following description referring to the attached drawings.

Fig. 1 is an explanatory drawing of a conventional surface fault detector;

Fig. 2 is an explanatory drawing of a rotatable polygon mirror;

Fig. 3 is an explanatory drawing showing the relation between the light beam and the object to be inspected;

Fig. 4(a) is an explanatory drawing showing the principle of the surface defect detector of this invention;

Fig. 4(b) is an explanatory drawing of an acousto-optic deflector;

Fig. 5 is a circuitry showing the correction circuit and the deflector driver;

Fig. 6 is a timechart showing the operation timing of each component; and

Fig. 7 is an explanatory drawing showing the relation between the light beams and the object to be inspected.

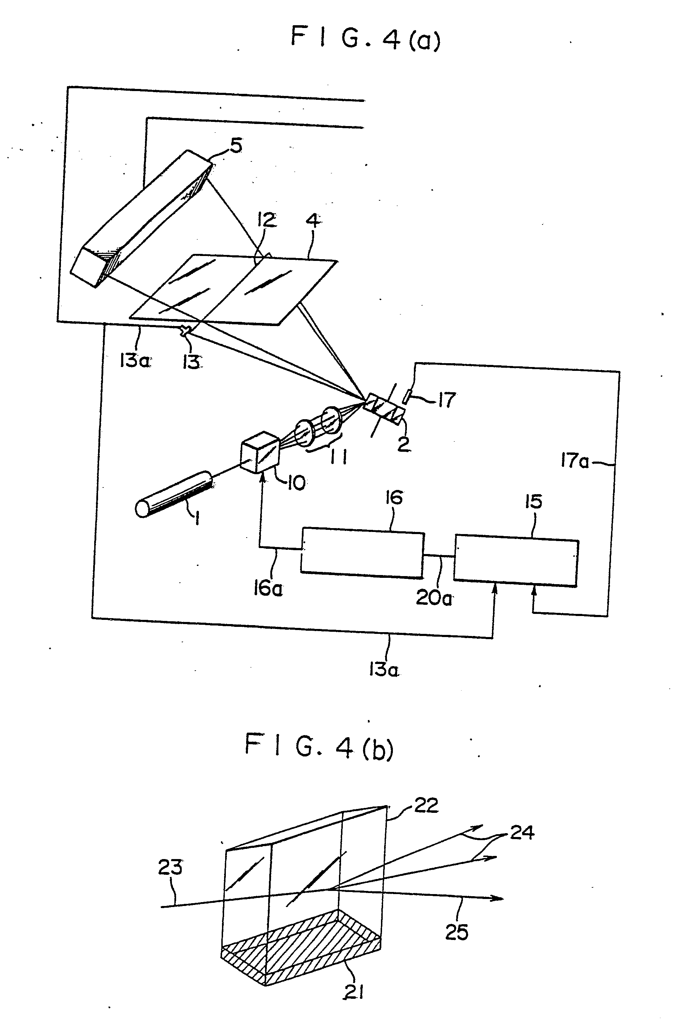

As shown in Fig. 4(a), in this invention, the light beam from the light source passes through a deflection angle correction means such as an acousto-optic deflector 10 and a lens system 11 so that the beam diameter on the object 4 is a desired value, 100 μm for example. The beam is reflected by the rotatable polygon mirror 2 to sweep across the object 4.

A sensor 17 for detecting the reference reflecting surface of the rotatable polygon mirror 2 generates an output 17a which together with the synchronizing signal 13a is applied to a rotatable polygon mirror angle correction circuit 15. The rotatable polygon mirror angle correction circuit 15 then sends a correction signal 20a to a deflector driver 16 which in turn transmits a signal 16a to the acousto-optic deflector 10.

The acousto-optic deflector 10 is controlled by the frequency of the applied signal 16a to change the angle of incoming light with respect to the outgoing light, i.e., the deflecting angle so that when there is a variation in the scanning light beam positions 7a, 7b causing the unscanned areas 8, the deflecting angle is controlled for each reflecting surface of the rotatable polygon mirror 2 so as to eliminate such unscanned areas.

The acousto-optic deflector 10 consists, as shown in Fig. 4(b), of a plate of piezoelectric element 21 and an acousto-optic medium 22 attached to it. When the frequency of the signal applied to the piezoelectric element 21 is changed, the crystal structure of the acousto-optic medium 22 also changes and this in turn changes the angle of the diffracted light 24 relative to the incoming light 23. In this figure reference numeral 25 signifies a secondary diffracted light.

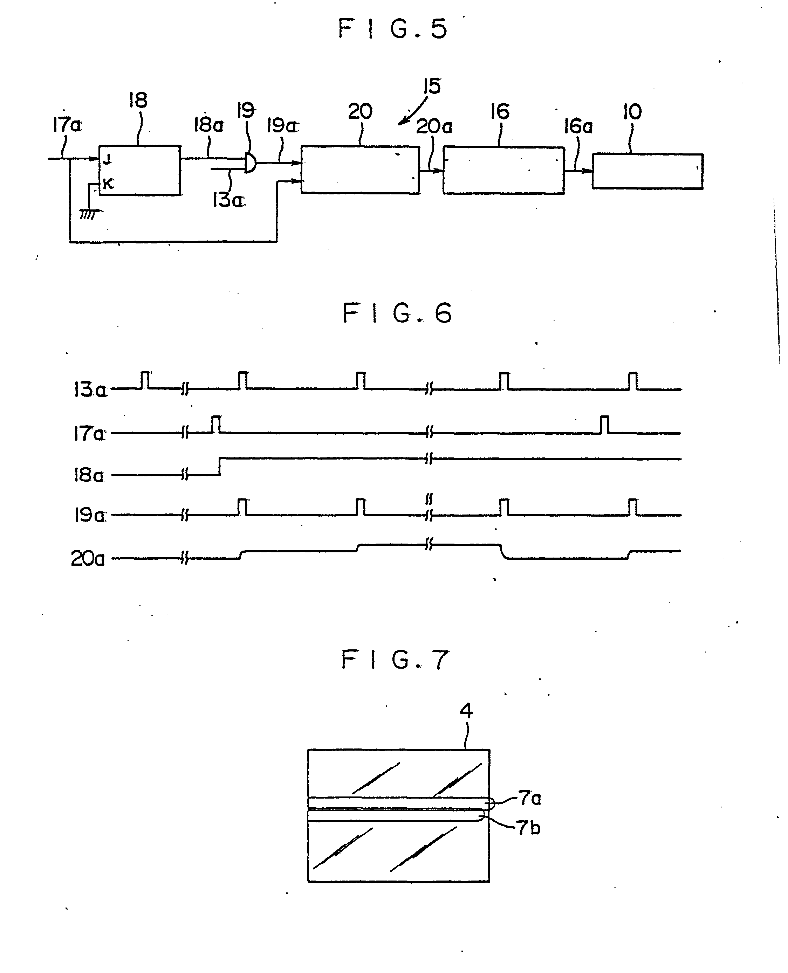

Fig. 5 shows a circuit including the rotatable polygon mirror angle correction circuit 15 and the deflector driver 16. Fig. 6 is a timechart showing the operation timing of each component.

In the surface fault detector of this invention, when the rotatable polygon mirror 2 reaches the reference rotating speed, this situation is detected by a circuit not shown. The output 17a of the reference reflecting surface detection sensor 17 is applied to a flip-flop circuit 18 which in turn outputs a signal 18a to a gate circuit 19 for gating the synchronizing signal 13a. When the output of signal 18a is "high", the synchronizing signal 13a generated every time the scanning light passes the light detector 13 is gated through the gate circuit 19 to produce an output signal train 19a. The output signal train 19a is a series of signals each containing the corresponding reflecting mirror surface number and generated at intervals equal to the number of reflecting surfaces of the rotatable polygon mirror 2.

The output signal train 19a is sent to a mirror angle correction signal generating circuit 20 which produces the mirror angle correction signal 20a. The mirror angle correction signal generating circuit 20 comprises a memory to digitally store the amount of correction angle for each surface of the rotatable polygon mirror 2 and a D/A converter to convert the digital quantity into analog quantity thereby producing the mirror angle correction signal 20a. Each time the output signal 19a is received, the circuit 20 outputs the mirror angle correction signal 20a corresponding to the amount of angle to be corrected for each surface of the mirror.

The deflector driver 16 consists of a voltage controlled oscillator which changes the frequency in proportion to the magnitude of the input voltage. Upon receiving a correction signal 20a the deflector driver 16 sends to the acousto-optic deflector 10 the signal 16a having a frequency which corresponds to the magnitude of the correction signal 20a.

As can be seen from the foregoing, when no correction is made on the mirror angle for each surface of the rotatable polygon mirror 2, there are areas 8 left unscanned as shown in Fig. 3. But the angle correction for each surface of the rotatable polygon mirror 2 as performed with this invention enables the lines of scan 7a, 7b to overlap each other, as shown in Fig. 7, thus eliminating the unscanned areas 8 and improving the fault detection performance.

CLAIMS:

1. A surface fault detector of the flying spot type comprising a light source (1), a rotatable polygonal mirror (2), and a light receiving element (5), characterised by correction means (10) disposed in the light path between the light source and the rotatable polygonal mirror to change the angle of incidence of the light beam upon said rotatable polygonal mirror in a sense tending to render more regular the pitch of successive scans of said flying spot over a surface under inspection.

2. A surface fault detector as defined in claim 1, wherein the correction means comprises an acousto-optical deflector (10).

3. A surface fault detector as defined in claim 2, wherein said detector further comprises a lens system (11) disposed in the light path between the light source and said rotatable polygonal mirror.

4. A surface fault detector as defined in claim 2, wherein said acousto-optical deflector (10) consists of a piezoelectric element (21) and an acousto-optical medium (22) attached to said piezoelectric element.

F I G. 1

F I G. 2

F I G. 3

# F I G. 4 (a)

# F I G. 4 (b)

0087235

# F I G . 5

# F I G . 6

# F I G . 7

**European Patent Office**

EUROPEAN SEARCH REPORT

**0087235**
Application number

EP  83 30 0588

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 203 672  (E.H. SMITH JR.) * Claims 1, 3, 8; column 1, lines 5-49; column 3, lines 52-67; column 4, line 63 – column 5, line 5; abstract; figure 1 * | 1,2 | G 01 N   21/89 G 02 B   27/17 G 02 F    1/33 |
| Y | DE-A-2 811 230  (XEROX CORP.) * Claim 1;  page 11, last paragraph – page 12, first paragraph; figure 1 * | 1-4 | |
| Y | DE-B-1 937 787  (WESTERN ELECTRIC CORP.) * Claim 1; column 5, lines 7-34; figure 1 * | 4 | |
| Y | DE-A-2 951 435  (PITNEY-BOWES INC.) * Claim 1; figure 1 * | 1-3 | TECHNICAL FIELDS SEARCHED (Int. Cl. 3) |
| A | EP-A-0 020 930  (IBM CORP.) * Claims 1, 2, 8, 9; abstract; page 5, lines 1-20; figures 1, 3 * | 1,2,4 | G 01 N   21/00 G 02 B   27/17 G 02 F    1/33 |
| A | DE-A-3 020 241  (OLYMPUS OPTICAL CO.) * Claims 1-3; page 4, lines 5-21; page 5, last paragraph – page 6, line 5; figures 1, 4 * | 1-4 | |

The present search report has been drawn up for all claims

| Place of search | Date of completion of the search | Examiner |
|---|---|---|
| BERLIN | 29-04-1983 | HOFMANN D G |